# FASCICULE DE BREVET EUROPEEN

(11) **EP 1 678 899 B1**
(45) Date de publication et mention de la délivrance du brevet: **30.07.2008**
(21) Numéro de dépôt: 04805340.9
(22) Date de dépôt: 28.10.2004
(51) Int. Cl.: H04L 12/66

(54) **PROCEDE ET DISPOSITIF D ACCES A UN TERMINAL SERVEUR MOBILE D UN PREMIER RESEAU DE COMMUNICATION AU MOYEN D UN TERMI NAL CLIENT D UN AUTRE RESEAU DE COMMUNICATION**
VERFAHREN UND EINRICHTUNG ZUM ZUGREIFEN AUF EIN MOBILSERVERENDGERÄT EINES ERSTEN KOMMUNIKATIONSNETZES UNTER VERWENDUNG EINES CLIENT-ENDGERÄTS EINES ANDEREN KOMMUNIKATIONSNETZES
METHOD AND DEVICE FOR ACCESSING A MOBILE SERVER TERMINAL OF A FIRST COMMUNICATION NETWORK USING A CLIENT TERMINAL OF ANOTHER COMMUNICATION NETWORK

(30) Priorité: 30.10.2003 FR 0312766
(43) Date de publication de la demande: 12.07.2006
(73) Titulaire: Wavecom, 92442 Issy-les-Moulineaux Cedex (FR)
(72) Inventeur: DELIBIE, Yannick, F-35235 Thorigné-Fouillard (FR); BILLANT, Christophe, F-35190 Saint Thual (FR)
(74) Mandataire: Bioret, Ludovic
(86) Numéro de dépôt international: PCT/FR2004/002786
(87) Numéro de publication internationale: WO 2005/043847

(56) Documents cités:
- WO-A-03/010669
- US-A- 5 732 074
- US-A1- 2003 028 612
- US-B1- 6 519 241

## Description

### 1. Domaine de l'invention

Le domaine de l'invention est celui des applications sans fil, ou « wireless applications » en anglais.

Par application sans fil, on entend, selon une définition communément admise, tout type d'applications temps-réel embarquées nécessitant pour communiquer une connexion vers un réseau sans fil et/ou mobile, du type réseau GSM, GPRS, et/ou UMTS par exemple, autres que les applications de téléphonie mobile et « mains libres ».

Plus précisément, l'invention concerne les terminaux mobiles serveurs exécutant de telles applications sans fil destinées à rendre accessibles différents types d'informations et/ou différents types de services auprès d'autres terminaux clients fixes et/ou mobiles distants. Ces différents types de services peuvent être soit spécifiques et ne concerner qu'un ensemble restreint d'individus, soit être génériques et/ou publiques, et être ainsi potentiellement accessibles à tout individu (consultation de pages web sur le réseau Internet, par exemple).

Ainsi, l'invention s'applique notamment, mais non exclusivement, à l'accès par un terminal client fixe ou mobile à un terminal serveur mobile, pour l'utilisation de services et/ou la consultation ou la mise à jour d'informations rendus disponibles par le terminal serveur mobile.

A titre d'exemple illustratif et non limitatif, l'invention s'applique ainsi notamment et non exclusivement à des domaines aussi variés que ceux :
- l'automotive ;
- les applications en mode point à point du type M2M (pour « machine to machine » en anglais) ;
- les applications de télémédecine embarquées sur des terminaux mobiles ;
- la consultation de pages web mises à disposition par un terminal serveur mobile.

### 2. L'art antérieur

Aujourd'hui, les terminaux serveurs mobiles, du type téléphones mobiles ou autres terminaux portables de radiocommunication sont de plus en plus utilisés. L'usage de tels terminaux serveurs mobiles est cependant fortement limité par le fait que ces derniers doivent nécessairement être connectés sur un réseau mobile privé et qu'ils ne peuvent donc être accédés que par des terminaux clients fixes ou mobiles également connectés sur le même réseau privé.

En effet, il convient de préciser que tout réseau de communication mobile est fortement sécurisé au moyen d'un ou plusieurs par-feux. De ce fait, il n'est pas possible d'accéder directement à un terminal serveur mobile qui serait connecté sur un tel réseau de communication mobile protégé par ce ou ces par-feux, à partir d'un terminal client fixe ou mobile qui n'appartiendrait pas à ce même réseau mobile.

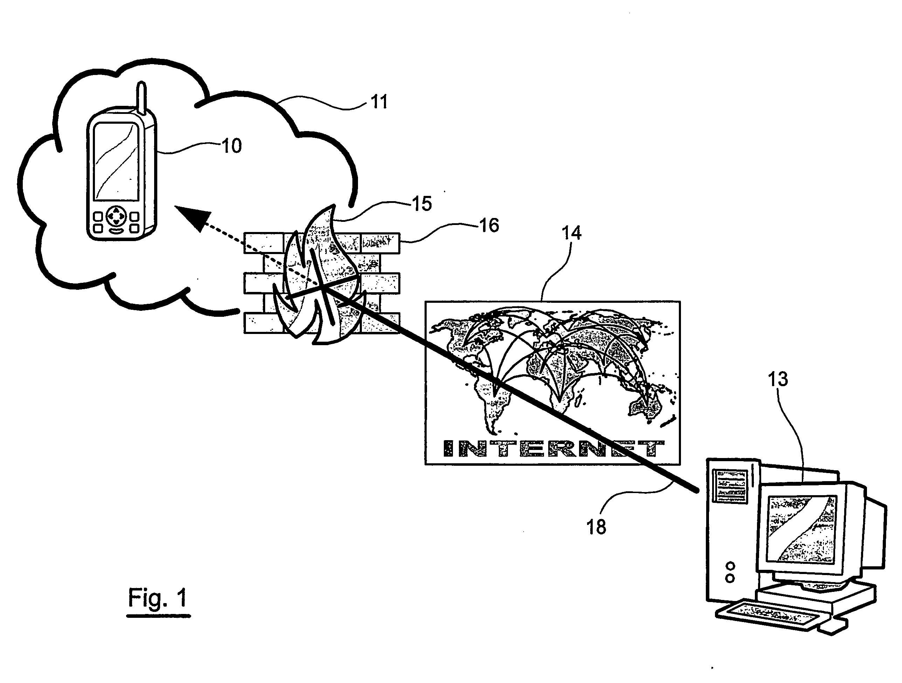

De façon plus précise et comme illustré sur le figure 1, aucun terminal serveur mobile (10) d'un réseau public terrestre (11) d'un opérateur (PLMN pour « Public Land Mobile Network » en anglais), ne peut être accédé depuis un terminal client (13) d'un autre réseau externe (14), (Internet, par exemple). Ainsi, seul un terminal client appartenant au même réseau public terrestre qu'un terminal serveur mobile pourra accéder et/ou utiliser les services de ce terminal serveur mobile. Trois contraintes techniques principales favorisent cette situation :
- tout d'abord, sur un réseau public terrestre (11) d'un opérateur (PLMN), toute adresse IP (« Internet Protocol » en anglais ou protocole Internet en français) d'identification d'un terminal serveur est allouée dynamiquement. Cette adresse IP dynamique n'existe donc que sur le réseau public terrestre l'ayant allouée. Elle n'est donc connue que des seuls terminaux clients appartenant à ce même réseau public privé, lesquels sont les seuls à pouvoir accéder et/ou utiliser les services dudit terminal serveur mobile ;
- ensuite, sur un réseau public terrestre d'un opérateur (PLMN) est mis en oeuvre un mécanisme (15) d'optimisation du nombre des adresses IP utilisées, lequel a pour fonction de traduire chaque port de communication public sollicité sur le réseau en un port de communication privé uniquement reconnu par ce réseau, Un tel mécanisme (15), plus connu sous le terme anglais NAT (pour « Network Address Translator » ou « Traducteur d'adresses réseau » en français) permet ainsi d'allouer dynamiquement un identifiant privé à chacune des applications exécutées par chacun des terminaux serveurs mobiles d'un même réseau public terrestre ;
- enfin, dans la très grande majorité des cas, la configuration des par-feux (16) destinés à protéger un réseau public terrestre mobile (11) est réalisée de façon à interdire toute requête entrante (18) du type TCP/IP (pour « Transfert Control Protocol / Internet Protocol » en anglais, ou « protocole de contrôle de transfert / Protocole Internet » en français).
On connaît par ailleurs, à travers le document de brevet US-A-5 732 074, un dispositif d'accès aux données et services d'un contrôleur de réseau embarqué sur un véhicule à partir d'un PC connecté à un réseau de type Internet.
On connaît également, à travers le document de brevet US 2003/0110294, une méthode de mise à jour sécurisée d'adresse IP temporaire pour un serveur mobile, à travers notamment un pare-feu de type NAT/NAPT.

### 3. Objectifs de l'invention

L'invention a notamment pour objectif de pallier ces inconvénients principaux de l'art antérieur.

Plus précisément, un objectif de l'invention est de fournir une technique permettant de communiquer avec un terminal mobile serveur d'un premier réseau public terrestre (PLMN), depuis un terminal client fixe ou mobile d'un second réseau public terrestre, malgré les contraintes techniques précitées de sécurisation dudit premier réseau.

En d'autres termes, un objectif de l'invention est de fournir une technique permettant d'accéder aux services et/ou aux informations d'un terminal serveur mobile d'un premier réseau public terrestre mobile d'un opérateur, à partir d'un terminal client, fixe ou mobile, n'appartenant pas nécessairement au même premier réseau. Il convient de noter que la formulation de ce problème, qui va également à l'encontre des habitudes de l'homme du métier, fait en soi partie de l'invention.

Un autre objectif de l'invention est de fournir une telle technique qui n'utilise pas les méthodes de connexion habituelles de l'art antérieur, essentiellement basées sur des échanges de requêtes TCP/IP pour établir une session de communication avec un terminal serveur mobile, à partir d'un terminal client.

Un autre objectif de l'invention est de fournir une telle technique qui puisse intégrer différents niveaux de sécurisation, d'une part en termes d'initialisation d'une session de communication avec un terminal serveur mobile d'un premier réseau terrestre de communication et d'autre part, en termes d'accès aux services et/ou informations dudit terminal serveur mobile, depuis un autre terminal fixe ou mobile n'appartenant pas au même premier réseau.

Un objectif supplémentaire de l'invention est de fournir une telle technique qui permette également de s'affranchir des contraintes techniques de sécurisation de l'art antérieur précitées pour l'établissement d'une session de communication entre un terminal serveur mobile appartenant à un premier réseau public terrestre (PLMN) et un terminal client appartenant à un autre réseau, mais souhaitant accéder ou utiliser les données et/ou services dudit terminal serveur mobile.

Encore un objectif de l'invention est de fournir une telle technique qui favorise la convergence technique entre les applications sans fil ou mobiles du type M2M et les services Web.

Encore un dernier objectif de l'invention est de fournir une telle technique qui soit simple et peu coûteuse à mettre en oeuvre.

### 4. Caractéristiques principales de l'invention

Ces objectifs, ainsi que d'autres qui apparaîtront par la suite sont atteints à l'aide d'un procédé d'accès d'au moins un terminal client connecté à un premier réseau de communication, aux données et/ou services d'un terminal serveur connecté à un second réseau de communication, les premier et second réseaux pouvant cohabiter ou former un unique réseau. Une des difficultés solutionnées par l'invention réside en particulier dans le fait que le terminal serveur est un terminal serveur mobile. Ainsi, un tel procédé selon l'invention comprend avantageusement au moins les étapes suivantes :
- d'initialisation d'une session de communication par le terminal client avec le terminal serveur mobile, comprenant une étape de transmission par un premier serveur mandaté public appartenant audit premier réseau de communication d'une demande d'initialisation de session de communication vers un second serveur mandaté privé appartenant audit second réseau de communication, sous la forme d'un signal de demande d'accès, ledit signal de demande d'accès transmis par ledit terminal client étant du type appartenant au groupe comprenant au moins :
   o un message SMS ;
   o un courrier électronique ; et comprenant une liste de paramètres prédéterminée ;
- d'établissement de la session de communication par ouverture d'un tunnel de communication direct entre le terminal client et le terminal serveur mobile ; de façon que ledit terminal client puisse consulter des informations rendues disponibles par le terminal serveur mobile et/ou que le terminal client puisse utiliser et/ou interagir avec toute ou partie des services du terminal serveur mobile.

Avantageusement, le second réseau de communication auquel appartient le terminal serveur mobile est un réseau de communication mobile sans fil accessible au travers d'un par-feu de sécurisation.

Préférentiellement, l'étape d'initialisation de la communication comprend au moins les étapes successives suivantes :
- étape A : émission d'une première requête du type TCP (pour « Transfert Control Protocol » en anglais, ou « protocole de contrôle de transfert » en français) du terminal client vers un serveur de noms de domaines ;
- étape B : réception par le terminal client d'une réponse à la première requête, laquelle contient au moins un ensemble de paramètres prédéterminés de connexion à un premier serveur mandaté public appartenant au premier réseau de communication ;
- étape C : connexion du terminal client au premier serveur mandaté public, au moyen des paramètres prédéterminés, du type adresse IP et/ou numéro de port de communication ;
- étape D : transmission par le premier serveur mandaté public d'une demande d'initialisation de session de communication vers un second serveur mandaté privé appartenant au second réseau de communication, sous la forme d'un signal de demande d'accès ;
- étape E : émission d'une deuxième requête de connexion du type TCP par le second serveur mandaté privé, sur un port de communication prédéterminé du terminal serveur mobile ;
- étape F : transmission par le terminal serveur mobile d'un acquittement à la deuxième requête de connexion TCP au second serveur mandaté privé ;
- étape G : émission d'une troisième requête de connexion du type TCP par le second serveur mandaté privé sur un port de communication prédéterminé du premier serveur mandaté public ;
- étape H : transmission par le premier serveur mandaté public d'un acquittement à la troisième requête de connexion TCP au second serveur mandaté privé ;
- étape I : transmission par le premier serveur mandaté public d'un acquittement à la première requête de connexion TCP au terminal client.

Ainsi, l'enchaînement successif de ces différentes étapes permet avantageusement d'initier une session de communication et d'établir l'ouverture du tunnel de communication direct entre le terminal client et le terminal serveur mobile, le tunnel traversant le ou les par-feux de sécurisation du réseau sur lequel est connecté le terminal serveur mobile.

Préférentiellement, le signal de demande d'accès transmis par le terminal client est du type appartenant au groupe comprenant au moins :
- un message SMS ;
- un courrier électronique ;
et comprend une liste de paramètres prédéterminée.

De façon avantageuse, la liste de paramètres prédéterminée comprend au moins des paramètres du type appartenant au groupe comprenant au moins :
- une adresse IP d'identification du premier serveur mandaté public à l'origine du signal de demande d'accès ;
- un numéro de port de communication d'identification complémentaire du premier serveur mandaté public à l'origine du signal de demande d'accès ;
- une clé au moins de sécurisation de l'étape de demande d'initialisation de la communication.

Dans un mode de réalisation préférentiel de l'invention, la liste de paramètres prédéterminée comprend en outre avantageusement au moins un paramètre complémentaire correspondant à un numéro d'appel unique du second terminal serveur, lorsque le signal de demande d'accès est du type message SMS, et/ou correspondant au type de protocole de sécurisation dudit tunnel de communication.

Dans une variante du mode de réalisation préférentiel de l'invention, la liste de paramètres prédéterminée comprend en outre au moins un paramètre complémentaire correspondant à une adresse courriel du second terminal serveur, lorsque le signal de demande d'accès est du type message électronique.

Préférentiellement, la clé de sécurisation est une clé de négociation et/ou de cryptage.

Dans un mode de réalisation préféré de l'invention, le tunnel de communication établi entre le terminal client et le terminal serveur mobile comprend avantageusement des moyens d'authentification du type HTTP.

Avantageusement, le tunnel de communication établi entre le terminal client et le terminal serveur mobile comprend des moyens sécurisés de transmission de données du type utilisant au moins :
- le protocole IPSEC ;
- le protocole d'encryptage du tunnel de communication.

L'invention concerne également de façon avantageuse un système de communication et/ou radiocommunication, comprenant des moyens d'accès d'au moins un terminal client connecté à un premier réseau de communication, aux données et/ou services d'un terminal serveur connecté à un second réseau de communication, lesdits premier et second réseaux pouvant cohabiter ou former un unique réseau. Selon l'invention, ledit terminal serveur est un terminal mobile, et un tel système comprend des moyens d'initialisation d'une session de communication par ledit terminal client avec ledit terminal serveur mobile, comprenant des moyens de transmission par un premier serveur mandaté public appartenant audit premier réseau de communication d'une demande d'initialisation de session de communication vers un second serveur mandaté privé appartenant audit second réseau de communication, sous la forme d'un signal de demande d'accès, ledit signal de demande d'accès transmis par ledit terminal client étant du type appartenant au groupe comprenant au moins :
o un message SMS ;
o un courrier électronique ;
et comprenant une liste de paramètres prédéterminée, et des moyens d'établissement de ladite session de communication par ouverture d'un tunnel de communication direct entre ledit terminal client et ledit terminal serveur,
de façon que ledit terminal client puisse consulter des informations rendues disponibles par ledit terminal serveur et/ou que ledit terminal client puisse utiliser et/ou interagir avec toute ou partie des services dudit terminal serveur.

De façon également avantageuse, le procédé selon l'invention est appliqué aux domaines variés appartenant au groupe comprenant au moins :
- des applications sans fil utilisant des services web ;
- des applications de télémédecine embarquées permettant à un médecin d'accéder régulièrement au téléphone mobile jouant le rôle d'un terminal serveur mobile, de façon à accéder et contrôler les données d'un patient, propriétaire dudit téléphone mobile;
- des applications distribuées interactives du type comprenant au moins :
   o les jeux distribuées ;
   o les applications de travail collaboratif embarquées sur des terminaux mobiles communicants.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est une illustration de la situation actuelle ou de l'art antérieur concernant l'impossibilité pour un terminal client (fixe ou mobile) connecté à l'Internet, de pouvoir accéder à un terminal serveur mobile d'un réseau public terrestre du type PLMN (pour « Public Land Mobile Network » en anglais) protégé par au moins un par-feu et au moins un traducteur d'adresses réseau publiques en adresses réseau privées (NAT pour « Network Address Translator » en anglais). Cette figure est décrite de façon détaillé au paragraphe 2 : Art antérieur du présent document ;

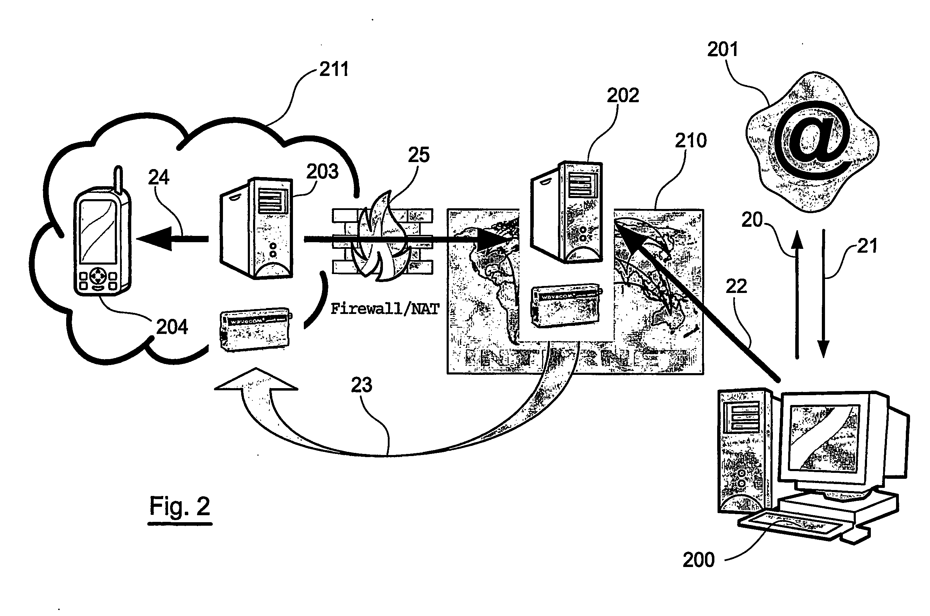

- la figure 2 illustre les différents composants techniques et les différentes étapes d'initialisation d'une session de communication intervenant respectivement dans le dispositif et le procédé selon l'invention ;

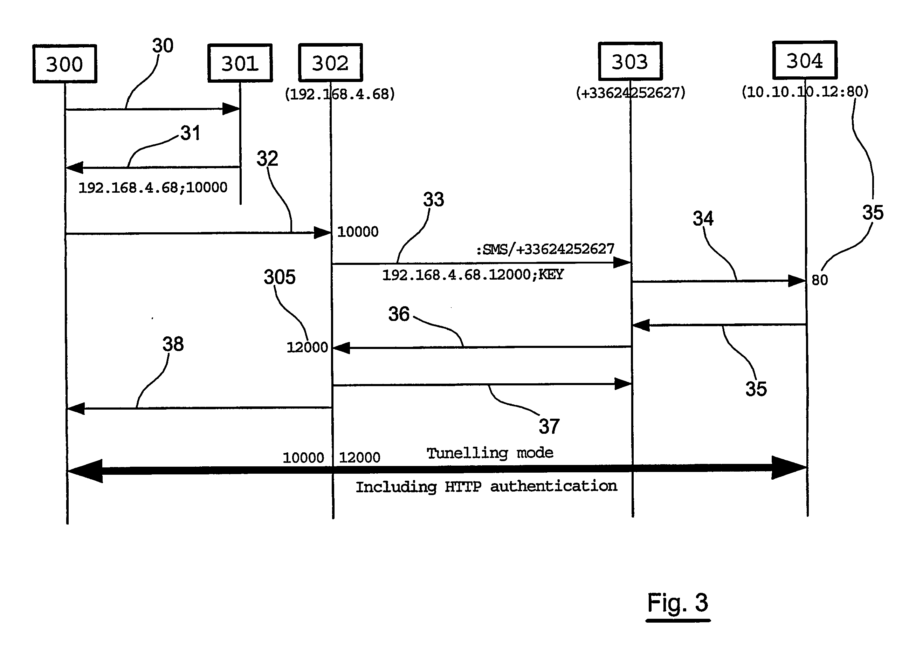

- la figure 3 est un diagramme de séquences explicitant les différentes étapes d'initialisation d'une session de communication conduisant à l'ouverture d'un tunnel de communication entre un terminal client d'un premier réseau de communication et un terminal serveur mobile d'un autre réseau de communication ;

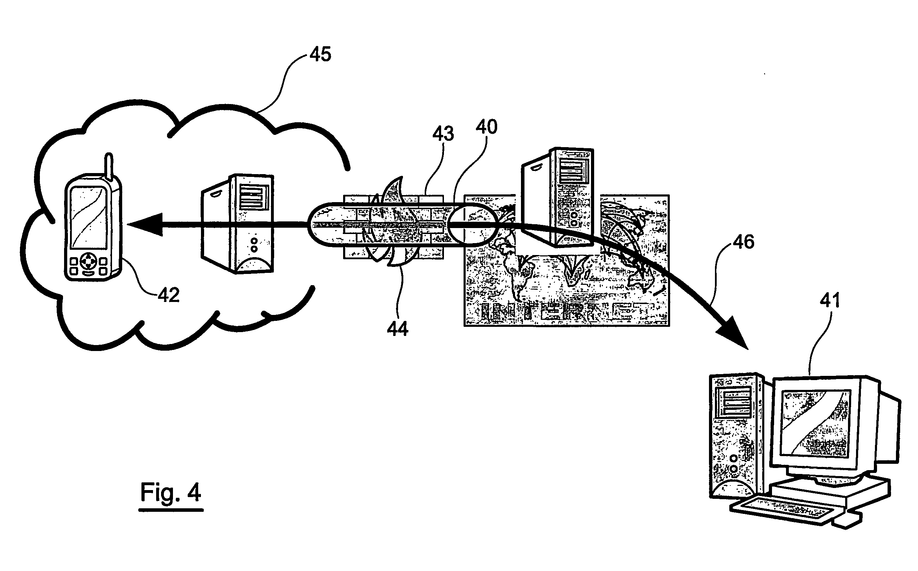

- la figure 4 illustre le schéma de communication entre un terminal client d'un premier réseau de communication et un terminal serveur mobile appartenant à un deuxième réseau privé sécurisé, suite à l'initialisation d'une session de communication et à l'ouverture d'un tunnel de communication traversant le par-feu et le traducteur d'adresse dudit réseau privé, au moyen du procédé selon l'invention.

Les figures 2 à 4 sont décrites de façon détaillées dans la description d'un mode de réalisation préférentielle de l'invention.

### 6. Rappel du principe général de l'invention

L'invention vise donc à fournir un procédé d'accès aux services ou données d'un terminal serveur mobile d'un réseau public terrestre au moyen d'un terminal client (fixe ou mobile) connecté su un autre réseau de communication, l'Internet par exemple. Un tel procédé s'appuie en particulier sur l'utilisation d'un message du type SMS (pour « Short Message Service » en anglais ou service de message court en français) ou d'un message électronique par le terminal client, pour demander l'initialisation d'une session de communication avec ledit terminal serveur mobile. L'initialisation d'une telle session se traduit en particulier par l'établissement d'un tunnel de communication entre le terminal client et le terminal serveur mobile, lequel traverse de façon sécurisée le par-feu (« firewall » en anglais) et le traducteur d'adresses réseau (NAT pour « Network Address Translator » en anglais)).

Différents modes de réalisation de l'invention sont techniquement envisageables, un d'entre eux étant décrit de façon plus détaillé ci-dessous.

### 7. Présentation d'un mode de réalisation préférentiel de l'invention

Dans un mode de réalisation préférentielle de l'invention, la solution technique selon l'invention s'appuie sur une démarche originale permettant d'autoriser, moyennant sécurisation, l'initialisation d'une session de communication entre un terminal serveur mobile d'un réseau public terrestre (PLMN) et un terminal client d'un autre réseau, comme si le terminal client appartenait audit réseau public terrestre.
Cette démarche s'appuie notamment sur une utilisation pertinente et originale des messages SMS (pour « Short Message Service » en anglais) comprenant un ensemble de paramètres, pour transmettre directement au serveur mandaté dudit réseau public terrestre une demande d'initialisation de communication avec un terminal serveur mobile préalablement identifié, ce qui permet ainsi de s'affranchir du problème selon l'art antérieur lié à la transmission d'une requête TCP/IP. En effet, toute requête de ce type de demande d'initialisation d'une session de communication avec un terminal serveur mobile d'un PLMN serait dans tous les cas est bloquée par le par-feu et le traducteur d'adresses réseau de ce PLMN.

De façon avantageuse, le procédé selon l'invention concerne d'une part l'initialisation d'une session de communication par le terminal client avec le terminal serveur mobile, et d'autre part, l'établissement d'une session de communication par ouverture d'un tunnel de communication direct entre le terminal client et le terminal serveur. L'ouverture d'un tel tunnel direct permet ainsi au terminal client de pouvoir consulter des informations rendues disponibles par le terminal serveur et/ou de pouvoir utiliser et interagir avec toute ou partie des services du terminal serveur.

Comme illustré sur les figures 2 et 3, l'étape d'initialisation de la communication comprend au moins les étapes successives suivantes :
- étape A : émission d'une première requête (20, 30) du type TCP (pour « Transfert Control Protocol » en anglais, ou « protocole de contrôle de transfert » en français) du terminal client (200, 300) vers un serveur (201, 301) de noms de domaines ;
- étape B : réception par le terminal client (200, 300) d'une réponse (21, 31) à la première requête (20, 30), laquelle contient au moins un ensemble de paramètres prédéterminés de connexion à un premier serveur mandaté public (202, 302) appartenant au premier réseau de communication (210);
- étape C : connexion (22, 32) du terminal client (200, 300) au premier serveur mandaté public (202, 302), au moyen des paramètres prédéterminés, du type adresse IP et/ou numéro de port de communication;
- étape D : transmission par le premier serveur mandaté public (202, 302) d'une demande (23, 33) d'initialisation de session de communication vers un second serveur mandaté privé (203, 303) appartenant au second réseau de communication (211), sous la forme d'un signal de demande d'accès ;
- étape E : émission d'une deuxième requête (24, 34) de connexion du type TCP par le second serveur mandaté privé (203, 204), sur un port de communication (35) prédéterminé du terminal serveur mobile (204, 304) ;
- étape F : transmission par le terminal serveur mobile (204, 304) d'un acquittement (35) à la deuxième requête (24, 34) de connexion TCP, au second serveur mandaté privé (203, 303) ;
- étape G : émission d'une troisième requête (36) de connexion du type TCP par le second serveur mandaté privé (203, 303) sur un port de communication (305) prédéterminé du premier serveur mandaté public (202, 302) ;
- étape H : transmission par le premier serveur mandaté public (202, 302) d'un acquittement (37) à la troisième requête de connexion TCP (36), au second serveur mandaté privé (203, 303) ;
- étape I : transmission par le premier serveur mandaté public (202, 302) d'un acquittement (38) à la première requête de connexion TCP (20, 30), au terminal client (200, 300).

Ainsi, comme illustré sur la figure 4, l'enchaînement successif de ces différentes étapes permet d'initier une session de communication et d'établir l'ouverture d'un tunnel de communication direct (40) entre le terminal client (41) et le terminal serveur mobile (42). Grâce au procédé selon l'invention, le tunnel de communication (40) ainsi ouvert traverse le ou les par-feux (43) et traducteurs d'adresses réseau (44) de sécurisation du réseau PLMN privé (45) sur lequel est connecté le terminal serveur mobile (42). Le terminal client (41) est alors en mesure de communiquer directement, en mode point à point (46) avec le terminal serveur mobile (42) et d'utiliser les services ou données rendus disponibles par ce dernier.
Il est bien entendu que sur la figure 3, les ports de communication référencés (35) et (305) sur la figure 3 sont donnés à titre de simple exemple indicatif et non limitatif, d'autre numéros de port de communication pouvant être utilisés, indifféremment en fonction des configurations réseau rencontrées.

Un tel procédé selon l'invention permet ainsi à tout terminal client d'un réseau de communication, du type Internet par exemple, de se connecter à un terminal client mobile d'un réseau public terrestre du type PLMN, comme s'il appartenait lui-même à ce réseau public terrestre sécurisé par des par-feux et traducteurs d'adresses réseau du type NAT (pour « Network Address Translator » en anglais).

En outre, il est important de souligner que les étapes successives d'initialisation d'une session de communication peuvent être sécurisée par des moyens de cryptage à une ou plusieurs clés publiques et privées. En effet, il est techniquement possible d'envisager l'encapsulation et le cryptage des paramètres prédéterminées contenu dans le message SMS permettant d'établir l'ouverture d'une session de communication et du tunnel de communication associé.

Dans une variante du mode de réalisation préférentielle précité, il est prévu que le terminal client ne transmette pas directement un SMS vers le serveur mandaté privé du réseau public terrestre PLMN, mais transmette à ce serveur mandaté privé un message électronique ou courriel sécurisé par des moyens de cryptage, lequel contient au minimum les mêmes informations de demande d'établissement de la session de communication que celles contenues dans le message SMS du mode de réalisation préférentielle précité :
- une adresse IP d'identification du premier serveur mandaté public à l'origine du signal de demande d'accès ;
- un numéro de port de communication d'identification complémentaire du premier serveur mandaté public à l'origine du signal de demande d'accès ;
- une clé au moins de sécurisation de l'étape de demande d'initialisation de la communication.

Dans les deux modes de réalisation de l'invention précités, la liste de paramètres prédéterminée comprend en outre au moins un paramètre complémentaire correspondant à un numéro d'appel unique du second terminal serveur, lorsque le signal de demande d'accès est du type message SMS, et/ou correspondant au type de protocole de sécurisation dudit tunnel de communication.

### 8. Avantages de la solution selon l'invention

Les procédé et dispositif d'accès d'au moins un terminal client connecté à un premier réseau de communication, aux données et/ou services d'un terminal serveur mobile connecté à un second réseau de communication fortement sécurisé, tels que proposés par l'invention présentent de nombreux avantages, dont une liste non exhaustive est donnée ci-dessous :
- amélioration de la convergence entre les applications en mode point à point plus connues sous l'acronyme M2M (pour « Machine To Machine » en anglais) et les applications de l'Internet et/ou les services Web;
- possibilité d'embarquer sur des serveurs mobiles de nouvelles applications sans fil ou de nouveaux services à forte valeur ajoutés. De telles applications peuvent notamment concerner à titre d'exemple illustratif et non limitatif, la télémédecine. En effet, l'invention permet d'envisager de nouvelles applications de télémédecine qui permettraient, par exemple, à un patient diabétique, de renseigner directement sont taux de glycémie sur son téléphone mobile, son médecin n'ayant plus qu'à venir interroger de façon sécurisée les données de sa patiente directement sur le téléphone mobile de cette dernière, lequel jouant le rôle d'un terminal serveur mobile.

## Revendications

1. Procédé d'accès d'au moins un terminal client connecté à un premier réseau de communication, aux données et/ou services d'un terminal serveur connecté à un second réseau de communication, lesdits premier et second réseaux pouvant cohabiter ou former un unique réseau et
**caractérisé en ce que** ledit terminal serveur étant un terminal mobile, **en ce que** ledit procédé comprend au moins les étapes suivantes :
- d'initialisation d'une session de communication par ledit terminal client avec ledit terminal serveur mobile, comprenant une étape de transmission par un premier serveur mandaté public appartenant audit premier réseau de communication d'une demande d'initialisation de session de communication vers un second serveur mandaté privé appartenant audit second réseau de communication, sous la forme d'un signal de demande d'accès, ledit signal de demande d'accès transmis par ledit terminal client étant du type appartenant au groupe comprenant au moins :
o un message SMS ;
o un courrier électronique ;
et comprenant une liste de paramètres prédéterminée ;
- d'établissement de ladite session de communication par ouverture d'un tunnel de communication direct entre ledit terminal client et ledit terminal serveur ;
de façon que ledit terminal client puisse consulter des informations rendues disponibles par ledit terminal serveur et/ou que ledit terminal client puisse utiliser et/ou interagir avec toute ou partie des services dudit terminal serveur.

2. Procédé d'accès d'au moins un terminal client connecté à un premier réseau de communication, aux données et/ou services d'un terminal serveur connecté à un second réseau de communication, selon la revendication 1, **caractérisé en ce que** ledit second réseau de communication est un réseau de communication mobile sans fil accessible au travers d'un par-feu de sécurisation.

3. Procédé d'accès d'au moins un terminal client connecté à un premier réseau de communication, aux données et/ou services d'un terminal serveur connecté à un second réseau de communication, selon l'une quelconques des revendications 1 et 2, **caractérisé en ce que** ladite étape d'initialisation de la communication comprend au moins les étapes successives suivantes :
- étape A : émission d'une première requête du type TCP (pour « Transfert Control Protocol » en anglais, ou « protocole de contrôle de transfert » en français) dudit terminal client vers un serveur de noms de domaines ;
- étape B ; réception par le terminal client d'une réponse à ladite première requête, laquelle contient au moins un ensemble de paramètres prédéterminés de connexion à un premier serveur mandaté public appartenant audit premier réseau de communication ;
- étape C : connexion dudit terminal client audit premier serveur mandaté public, au moyen desdits paramètres prédétermines, du type adresse IP et/ou numéro de port de communication ;
- étape D : transmission par ledit premier serveur mandaté public d'une demande d'initialisation de session de communication vers un second serveur mandaté privé appartenant audit second réseau de communication, sous la forme d'un signal de demande d'accès ;
- étape E : émission d'une deuxième requête de connexion du type TCP par ledit second serveur mandaté privé, sur un port de communication prédéterminé dudit terminal serveur mobile ;
- étape F : transmission par ledit terminal serveur mobile d'un acquittement à ladite deuxième requête de connexion TCP au dit second serveur mandaté privé ;
- étape G : émission d'une troisième requête de connexion du type TCP par ledit second serveur mandaté privé sur un port de communication prédéterminé dudit premier serveur mandaté public ;
- étape H : transmission par ledit premier serveur mandaté public d'un acquittement à ladite troisième requête de connexion TCP au dit second serveur mandaté privé ;
- étape I **:** transmission par ledit premier serveur mandaté public d'un acquittement à ladite première requête de connexion TCP au dit terminal client ;
de façon à initier ladite session de communication et établir l'ouverture dudit tunnel de communication direct entre le terminal client et le terminal serveur mobile, ledit tunnel traversant ledit par-feu de sécurisation.

4. Procédé d'accès d'au moins un terminal client connecté à un premier réseau de communication, aux données et/ou services d'un terminal serveur connecté à un second réseau de communication, selon la revendication 3,
**caractérisé en ce que** ladite liste de paramètres prédéterminée comprend au moins des paramètres du type appartenant au groupe comprenant au moins :
o une adresse IP d'identification dudit premier serveur mandaté public à l'origine dudit signal de demande d'accès ;
o un numéro de port de communication d'identification complémentaire dudit premier serveur mandaté public à l'origine dudit signal de demande d'accès ;
o une clé au moins de sécurisation de ladite étape de demande d'initialisation de la communication.

5. Procédé d'accès d'au moins un terminal client connecté à un premier réseau de communication, aux données et/ou services d'un terminal serveur connecté à un second réseau de communication, selon l'une quelconque des revendications 3 et 4, **caractérisé en ce** ladite liste de paramètres prédéterminée comprend en outre au moins un paramètre complémentaire correspondant à un numéro d'appel unique dudit second terminal serveur, lorsque ledit signal de demande d'accès est du type message SMS, et/ou correspondant au type de protocole de sécurisation dudit tunnel de communication.

6. Procédé d'accès d'au moins un terminal client connecté à un premier réseau de communication, aux données et/ou services d'un terminal serveur connecté à un second réseau de communication, selon l'une quelconque des revendications 3 et 4, **caractérisé en ce** ladite liste de paramètres prédéterminée comprend en outre au moins un paramètre complémentaire correspondant à une adresse courriel dudit second terminal serveur, lorsque ledit signal de demande d'accès est du type message électronique.

7. Procédé d'accès d'au moins un terminal client connecté à un premier réseau de communication, aux données et/ou services d'un terminal serveur connecté à un second réseau de communication, selon la revendication 4,
**caractérisé en ce que** ladite clé de sécurisation est une clé de négociation et/ou de cryptage.

8. Procédé d'accès d'au moins un terminal client connecté à un premier réseau de communication, aux données et/ou services d'un terminal serveur connecté à un second réseau de communication, selon l'une quelconque des revendications 1 à 7, **caractérisé en ce que** ledit tunnel de communication établi entre ledit terminal client et ledit terminal serveur mobile comprend des moyens d'authentification du type HTTP.

9. Procédé d'accès d'au moins un terminal client connecté à un premier réseau de communication, aux données et/ou services d'un terminal serveur connecté à un second réseau de communication, selon l'une quelconque des revendications 1 à 8, **caractérisé en ce que** ledit tunnel de communication établi entre ledit terminal client et ledit terminal serveur mobile comprend des moyens sécurisés de transmission de données du type utilisant au moins :
o le protocole IPSEC ;
o le protocole d'encryptage du tunnel de communication.

10. Système de communication et/ou radiocommunication, comprenant des moyens d'accès d'au moins un terminal client connecté à un premier réseau de communication, aux données et/ou services d'un terminal serveur connecté à un second réseau de communication, lesdits premier et second réseaux pouvant cohabiter ou former un unique réseau et
ledit terminal serveur étant un terminal mobile, **caractérisé en ce que** ledit système comprend les moyens suivants :
- des moyens d'initialisation d'une session de communication par ledit terminal client avec ledit terminal serveur mobile, comprenant des moyens de transmission par un premier serveur mandaté public appartenant audit premier réseau de communication d'une demande d'initialisation de session de communication vers un second serveur mandaté privé appartenant audit second réseau de communication, sous la forme d'un signal de demande d'accès, ledit signal de demande d'accès transmis par ledit terminal client étant du type appartenant au groupe comprenant au moins :
o un message SMS ;
o un courrier électronique ;
et comprenant une liste de paramètres prédéterminée ;
- des moyens d'établissement de ladite session de communication par ouverture d'un tunnel de communication direct entre ledit terminal client et ledit terminal serveur;
de façon que ledit terminal client puisse consulter des informations rendues disponibles par ledit terminal serveur et/ou que ledit terminal client puisse utiliser et/ou interagir avec toute ou partie des services dudit terminal serveur.

## Claims

1. Method for access, by at least one client terminal connected to a first communication network, to the data and/or services of a server terminal connected to a second communication network, wherein said first and second networks can cohabit or form a single network and said server terminal being a mobile terminal,
**characterised in that** said method includes at least the following steps:
- initialisation of a communication session by the client terminal with the mobile server terminal, including a transmission step by a first public proxy server belonging to the first communication network of a request to initialise a communication session to a second private proxy server belonging to said second communication network, in the form of an access request signal, said access request signal transmitted by said client terminal being of the type belonging to the group including at least:
- an SMS message;
- an e-mail message;
- establishment of the communication session by opening a direct communication tunnel between the client terminal and the mobile server terminal;
so that said client terminal can consult information made available by the server terminal and/or the client terminal can use and/or interact with all or some of the services of the server terminal.
and including a predetermined list of parameters;

2. Method for access, by at least one client terminal connected to a first communication network, to the data and/or services of a server terminal connected to a second communication network, according to claim 1, **characterised in that** said second communication network is a wireless mobile communication network accessible through a security firewall.

3. Method for access, by at least one client terminal connected to a first communication network, to the data and/or services of a server terminal connected to a second communication network, according to either one of claims 1 or 2,
**characterised in that** said communication initialisation step includes at least the following series of steps:
- step A: sending a first TCP (Transmission Control Protocol) request from the client terminal to a domain name server;
- step B: reception by the client terminal of a response to the first request, which contains at least one set of predetermined parameters for connection to a first public proxy server belonging to the first communication network;
- step C: connection of the client terminal to the first public proxy server, by means of predetermined parameters, such as the IP address and/or communication port number;
- step D: transmission by the first public proxy server of a request to initialise a communication session to a second private proxy server belonging to the second communication network in the form of an access request signal;
- step E: sending a second TCP connection request by the second private proxy server, to a predetermined communication port of the mobile server terminal;
- step F: transmission by the mobile server terminal of an acknowledgement of the second TCP connection request to the second private proxy server;
- step G: sending a third TCP connection request by the second private proxy server to a predetermined communication port of the first public proxy server;
- step H: transmission by the first public proxy server of an acknowledgement of the third TCP connection request to the second private proxy server;
- step I: transmission by the first public proxy server of an
acknowledgement of the first TCP connection request to the client terminal; so as to initiate said communication session and establish the opening of said direct communication tunnel between the client terminal and the mobile server terminal, wherein said tunnel passes through said security firewall.

4. Method for access, by at least one client terminal connected to a first communication network, to the data and/or services of a server terminal connected to a second communication network, according to claim 3, **characterised in that** said list of predetermined parameters includes at least parameters of the type belonging to the group including at least:
- an IP address for identification of the first public proxy server at the origin of the access request signal;
- a communication port number for additional identification of the first public proxy server at the origin of the access request signal;
- at least one key for securing the communication initialisation request step.

5. Method for access, by at least one client terminal connected to a first communication network, to the data and/or services of a server terminal connected to a second communication network, according to either one of claims 3 and 4, **characterised in that** said list of predetermined parameters also includes at least one additional parameter corresponding to a unique call number of the second server terminal, when said access request signal is an SMS message, and/or corresponding to the type of the communication tunnel security protocol.

6. Method for access, by at least one client terminal connected to a first communication network, to the data and/or services of a server terminal connected to a second communication network, according to either one of claims 3 and 4, **characterised in that** said list of predetermined parameters also includes at least one additional parameter corresponding to an e-mail address of said second server terminal, when said access request signal is of the e-mail messagetype.

7. Method for access, by at least one client terminal connected to a first communication network, to the data and/or services of a server terminal connected to a second communication network, according to claim 4, **characterised in that** said security key is a negotiation and/or encryption key.

8. Method for access, by at least one client terminal connected to a first communication network, to the data and/or services of a server terminal connected to a second communication network, according to any one of claims 1 to 7, **characterised in that** said communication tunnel established between said client terminal and said mobile server terminal includes http-type authentication means.

9. Method for access, by at least one client terminal connected to a first communication network, to the data and/or services of a server terminal connected to a second communication network, according to any one of claims 1 to 8, **characterised in that** said communication tunnel established between said client terminal and said mobile server terminal includes secure data transmission means of the type using at least:
- the IPSEC protocol;
- the communication tunnel encryption protocol.

10. System for communication and/or radiocommunication, comprising access means of at least one client terminal connected to a first communication network to the data and/or services of a server terminal connected to a second communication network, wherein said first and second networks can cohabit or form a single network, and said terminal server being a mobile terminal, **characterised in that** said system includes the following means:
- initialisation means of a communication session by the client terminal with the mobile server terminal, including transmission means by a first public proxy server belonging to the first communication network of a request to initialise a communication session to a second private proxy server belonging to said second communication network, in the form of an access request signal, said access request signal transmitted by said client terminal being of the type belonging to the group including at least:
- an SMS message;
- an e-mail message;
and including a predetermined list of parameters;
- establishment means of the communication session by opening a direct communication tunnel between the client terminal and the mobile server terminal;
so that said client terminal can consult information made available by the server terminal and/or the client terminal can use and/or interact with all or some of the services of the server terminal.

## Patentansprüche

1. Verfahren zum Zugreifen von mindestens einem an ein erstes Kommunikationsnetz angeschlossenen Client-Endgerät auf die Daten und/oder Dienste eines an ein zweites Kommunikationsnetz angeschlossenen Server-Endgeräts, wobei das erste und zweite Netz nebeneinander bestehen oder ein einziges Netz bilden können und das Server-Endgerät ein Mobilendgerät ist, **dadurch gekennzeichnet, dass** dieses Verfahren mindestens die folgenden Schritte umfasst:
- Initialisierung einer Kommunikationssitzung mit dem Mobilserverendgerät durch das Client-Endgerät, umfassend einen Schritt zur Übertragung einer Kommunikationssitzungsinitialisierungsanforderung durch einen ersten öffentlichen Proxy-Server, der dem ersten Kommunikationsnetz angehört, an einen zweiten privaten Proxy-Server, der dem zweiten Kommunikationsnetz angehört, in Form eines Zugriffsanforderungssignals, wobei das vom Client-Endgerät übertragene Zugriffsanforderungssignal vom Typ her der Gruppe angehört, die mindestens umfasst:
o eine SMS-Nachricht;
o eine E-Mail;
und eine vorgegebene Parameterliste umfasst;
- Aufbau dieser Kommunikationssitzung durch Öffnen eines direkten Kommunikationstunnels zwischen dem Client-Endgerät und dem Server-Endgerät,
so dass das Client-Endgerät die vom Server-Endgerät bereitgestellten Informationen abrufen kann und/oder das Client-Endgerät alle oder einen Teil der Dienste des Server-Endgeräts nutzen und/oder damit interagieren kann.

2. Verfahren zum Zugreifen von mindestens einem an ein erstes Kommunikationsnetz angeschlossenen Client-Endgerät auf die Daten und/oder Dienste eines an ein zweites Kommunikationsnetz angeschlossenen Server-Endgeräts nach Anspruch 1, **dadurch gekennzeichnet, dass** das zweite Kommunikationsnetz ein Mobilfunkkommunikationsnetz ist, auf das über eine Sicherheitsfirewall zugegriffen werden kann.

3. Verfahren zum Zugreifen von mindestens einem an ein erstes Kommunikationsnetz angeschlossenen Client-Endgerät auf die Daten und/oder Dienste eines an ein zweites Kommunikationsnetz angeschlossenen Server-Endgeräts nach einem beliebigen der Ansprüche 1 und 2, **dadurch gekennzeichnet, dass** der Schritt zur Initialisierung der Kommunikation mindestens die folgenden, aufeinander folgenden Schritte umfasst:
- Schritt A: Senden einer ersten Aufforderung des Typs TCP (für "Transfert Control Protocol" im Englischen oder "Übertragungssteuerungsprotokoll" im Deutschen) vom Client-Endgerät zu einem Domain-Namen-Server;
- Schritt B: Empfangen einer Antwort auf diese erste Aufforderung durch das Client-Endgerät, wobei die Antwort mindestens eine Gruppe von vorgegebenen Parametern für die Verbindung mit einem ersten öffentlichen Proxy-Server enthält, der dem ersten Kommunikationsnetz angehört;
- Schritt C: Verbindung des Client-Endgeräts mit dem ersten öffentlichen Proxy-Server mittels dieser vorgegebenen Parameter des Typs IP-Adresse und/oder Kommunikationsportnummer;
- Schritt D: Übertragung einer Kommunikationssitzungsinitialisierungsanforderung vom ersten öffentlichen Proxy-Server an einen zweiten privaten Proxy-Server, der dem zweiten Kommunikationsnetz angehört, in Form eines Zugriffsanforderungssignals;
- Schritt E: Senden einer zweiten Verbindungsaufforderung des Typs TCP vom zweiten privaten Proxy-Server über einen vorgegebenen Kommunikationsport des Mobilserverendgeräts;
- Schritt F: Übertragung einer Quittung auf diese zweite TCP-Verbindungsaufforderung vom Mobilserverendgerät an den zweiten privaten Proxy-Server;
- Schritt G: Senden einer dritten Verbindungsaufforderung des Typs TCP vom zweiten privaten Proxy-Server über einen vorgegebenen Kommunikationsport des ersten öffentlichen Proxy-Servers;
- Schritt H: Übertragen einer Quittung auf diese dritte TCP-Verbindungsaufforderung vom ersten öffentlichen Proxy-Server an den zweiten privaten Proxy-Server;
- Schritt I: Übertragen einer Quittung auf die erste TCP-Verbindungsaufforderung vom ersten öffentlichen Proxy-Server an das Client-Endgerät,
so dass die Kommunikationssitzung initiiert wird und die Öffnung des direkten Kommunikationstunnels zwischen dem Client-Endgerät und dem Mobilserverendgerät eingeleitet wird, der die Sicherheitsfirewall durchquert.

4. Verfahren zum Zugreifen von mindestens einem an ein erstes Kommunikationsnetz angeschlossenen Client-Endgerät auf die Daten und/oder Dienste eines an ein zweites Kommunikationsnetz angeschlossenen Server-Endgeräts nach Anspruch 3, **dadurch gekennzeichnet, dass** die vorgegebene Parameterliste mindestens Parameter des Typs umfasst, die der Gruppe angehören, welche mindestens umfasst:
o eine IP-Adresse zur Identifizierung des ersten öffentlichen Proxy-Servers, der ursächlich für das Zugriffsanforderungssignal ist;
o eine Kommunikationsportnummer zur Identifizierung des ersten öffentlichen Proxy-Servers, der ursächlich für das Zugriffsanforderungssignal ist;
o mindestens einen Schlüssel zur Sicherung des Kommunikationsinitialisierungsanforderungsschritts.

5. Verfahren zum Zugreifen von mindestens einem an ein erstes Kommunikationsnetz angeschlossenen Client-Endgerät auf die Daten und/oder Dienste eines an ein zweites Kommunikationsnetz angeschlossenen Server-Endgeräts nach einem beliebigen der Ansprüche 3 und 4, **dadurch gekennzeichnet, dass** die vorgegebene Parameterliste darüber hinaus mindestens einen ergänzenden Parameter umfasst, der einer einmaligen Rufnummer des zweiten Server-Endgeräts entspricht, wenn das Zugriffsanforderungssignal eine SMS-Nachricht ist, und/oder der dem Sicherungsprotokolltyp des Kommunikationstunnels entspricht.

6. Verfahren zum Zugreifen von mindestens einem an ein erstes Kommunikationsnetz angeschlossenen Client-Endgerät auf die Daten und/oder Dienste eines an ein zweites Kommunikationsnetz angeschlossenen Server-Endgeräts nach einem beliebigen der Ansprüche 3 und 4, **dadurch gekennzeichnet, dass** die vorgegebene Parameterliste darüber hinaus mindestens einen ergänzenden Parameter umfasst, der einer E-Mail-Adresse des zweiten Server-Endgeräts entspricht, wenn das Zugriffsanforderungssignal eine E-Mail-Nachricht ist.

7. Verfahren zum Zugreifen von mindestens einem an ein erstes Kommunikationsnetz angeschlossenen Client-Endgerät auf die Daten und/oder Dienste eines an ein zweites Kommunikationsnetz angeschlossenen Server-Endgeräts nach Anspruch 4, **dadurch gekennzeichnet, dass** dieser Sicherheitsschlüssel ein Aushandlungs- und/oder Verschlüsselungsschlüssel ist.

8. Verfahren zum Zugreifen von mindestens einem an ein erstes Kommunikationsnetz angeschlossenen Client-Endgerät auf die Daten und/oder Dienste eines an ein zweites Kommunikationsnetz angeschlossenen Server-Endgeräts nach einem beliebigen der Ansprüche 1 bis 7, **dadurch gekennzeichnet, dass** der zwischen dem Client-Endgerät und dem Mobilserverendgerät aufgebaute Kommunikationstunnel Authentifizierungsmittel des Typs HTTP umfasst.

9. Verfahren zum Zugreifen von mindestens einem an ein erstes Kommunikationsnetz angeschlossenen Client-Endgerät auf die Daten und/oder Dienste eines an ein zweites Kommunikationsnetz angeschlossenen Server-Endgeräts nach einem beliebigen der Ansprüche 1 bis 8, **dadurch gekennzeichnet, dass** der zwischen dem Client-Endgerät und dem Mobilserverendgerät aufgebaute Kommunikationstunnel sichere Datenübertragungsmittel eines Typs umfasst, der mindestens einsetzt:
o das Protokoll IPSEC;
o das Verschlüsselungsprotokolls des Kommunikationstunnels.

10. Kommunikations- und/oder Funkkommunikationssystem mit Mitteln zum Zugreifen von mindestens einem an ein erstes Kommunikationsnetz angeschlossenen Client-Endgerät auf die Daten und/oder Dienste eines an ein zweites Kommunikationsnetz angeschlossenen Server-Endgeräts, wobei das erste und zweite Netz nebeneinander bestehen oder ein einziges Netz bilden können und das Server-Endgerät ein Mobilendgerät ist, **dadurch gekennzeichnet, dass** dieses System die folgenden Mittel umfasst:
- Mittel zur Initialisierung einer Kommunikationssitzung mit dem Mobilserverendgerät durch das Client-Endgerät, umfassend Mittel zur Übertragung einer Kommunikationssitzungsinitialisierungsanforderung durch einen ersten öffentlichen Proxy-Server, der dem ersten Kommunikationsnetz angehört, an einen zweiten privaten Proxy-Server, der dem zweiten Kommunikationsnetz angehört, in Form eines Zugriffsanforderungssignals, wobei das vom Client-Endgerät übertragene Zugriffsanforderungssignal vom Typ her der Gruppe angehört, die mindestens umfasst:
o eine SMS-Nachricht;
o eine E-Mail;
und eine vorgegebene Parameterliste umfasst;
- Mittel zum Aufbauen der Kommunikationssitzung durch Öffnen eines direkten Kommunikationstunnels zwischen dem Client-Endgerät und dem Server-Endgerät,
so dass das Client-Endgerät die vom Server-Endgerät bereit gestellten Informationen abrufen kann und/oder das Client-Endgerät alle oder einen Teil der Dienste des Server-Endgeräts nutzen und/oder damit interagieren kann.
